# EUROPÄISCHE PATENTSCHRIFT

(11) **EP 1 304 924 B1**
(45) Veröffentlichungstag und Bekanntmachung des Hinweises auf die Patenterteilung: **18.05.2005**
(21) Anmeldenummer: 01957908.5
(22) Anmeldetag: 02.07.2001
(51) Int. Cl.: A01N 43/42, A01N 37/20, A01N 37/18

(54) **ZUSAMMENSETZUNGEN ZUR ABSCHRECKUNG KRIECHENDER INSEKTEN**
COMPOSITIONS FOR REPELLING CRAWLING INSECTS
COMPOSITIONS DESTINEES A ELOIGNER DES INSECTES RAMPANTS

(30) Priorität: 14.07.2000 DE 10034396
(43) Veröffentlichungstag der Anmeldung: 02.05.2003
(73) Patentinhaber: SCJ EurAFNE Ltd., Camberley, Surrey GU16 7AJ (GB); S.C. JOHNSON & SON, INC., Racine, WI 53403-2236 (US)
(72) Erfinder: SCHNORBACH, Hans-Jürgen, 40789 Monheim (DE); JUNG, Rolf, 51067 Köln (DE); RÖDER, Klaus, 51377 Leverkusen (DE); MICHELIS, Frank, 51371 Leverkusen (DE); KRÜGER, Bernd-Wieland, 51467 Bergisch Gladbach (DE)
(74) Vertreter: Ruschke, Hans Edvard, Dipl.-Ing.
(86) Internationale Anmeldenummer: PCT/EP2001/007518
(87) Internationale Veröffentlichungsnummer: WO 2002/005646

(56) Entgegenhaltungen:
- EP-A- 0 097 813
- EP-A- 0 557 174
- EP-A- 0 962 135
- EP-A- 1 092 413
- WO-A-00/19822
- WO-A-97/41728
- WO-A-99/56548
- DE-A- 19 642 957
- FR-A- 2 368 889
- FR-A- 2 755 141
- US-A- 4 869 896

## Beschreibung

Die vorliegende Erfindung betrifft neue Zusammensetzungen und ihre Verwendung zur Abschreckung kriechender Schadinsekten.

Kriechende Schadinsekten in und um den menschlichen Wohnbereich herum werden üblicherweise mit insektiziden Wirkstoffen bekämpft. Hierzu werden die Insekten entweder direkt mit den Produkten behandelt, kommen mit ihnen über Residualbeläge in Kontakt oder die Wirkstoffe werden über Köder oral aufgenommen. Die insektiziden Wirkstoffe müssen im direkten Wohnumfeld ausgebracht werden, was von vielen Menschen als negativ empfunden wird, da mit Insektiziden toxische Nebenwirkungen assoziiert werden.

Mechanische Massnahmen, wie sie beispielsweise gegen fliegende Insekten verwendet werden, z.B. Fliegennetze, Gitter oder Elektrofallen, sind gegen kriechende Insekten in der Regel nicht einsetzbar, da sie überwunden werden, nicht oder nur unzureichend wirken, wie z. B. Elektrofallen.

Grundsätzlich sollte es möglich sein, Schadinsekten mit Hilfe von praktisch ungiftigen Repellentien aus dem menschlichen Wohnbereich fernzuhalten. Repellentien, die kriechende Schadinsekten wie Ameisen oder Schaben abschrecken, haben bislang in der Praxis jedoch nur wenig Bedeutung erlangt, da die bekannten Repellentien flüchtig sind und somit nur über einen sehr begrenzten Zeitraum wirken. Die Wirkung der bekannten Repellentien gegen kriechende Schadinsekten ist daher schwach.

Es ist bekannt, dass parasitäre Schadinsekten und Milben, wie z. B.Mücken, Fliegen oder Zecken, durch cutan aufgetragene Repellentien abgeschreckt werden (vgl. z. B. Gupta R. K, Rutledge, I. C., "Role of repellents in vector control and disease prevention", publiziert in "Am. J. Trop. Med. Hyg." 50 (1995), 82-86). Bekannte Repellentien sind beispielsweise Diethyl-m-toluamid (DEET, mit der nachstehend angegebenen Formel I) (McCabe E. T., Barthel, W. F., Gertler S.L., Hall, S. A., "Insect repellents, III. N, N-Diethylamides", publiziert in "J. Org. Chem." 19 (1954),493-498), Merck 3535 (IR 3535, Formel II) (Klier M., Kuhlow, F., "Neue Insektenabwehrmittel - am Stickstoff substituierte β-Alaninderivate", publiziert in "J. Soc. Cosmet. Chem." 27 (1976), 141-153), und 1-(2-Methylpropyloxycarbonyl)-2- (hydroxyethyl)-piperidin (KBR 3023, Bayrepel®, Formel III) (Boeck J. et al., "Pestic. Sci." 48 (1996), 359-373) :

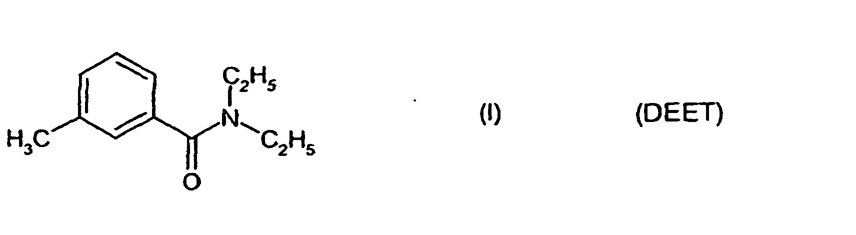

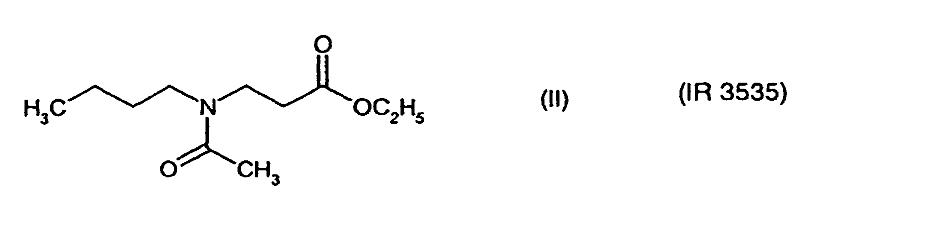

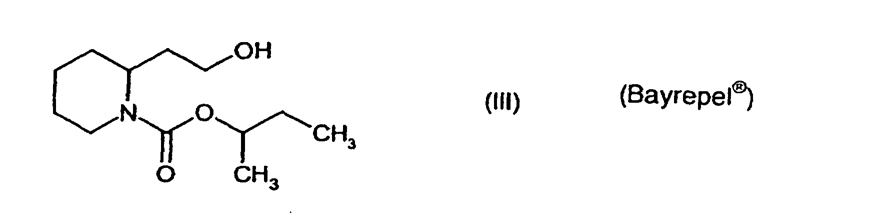

Auch diese Repellentien wirken gegen kriechende Insekten wie z. B. Ameisen und Schaben nur über wenige Stunden, da die Wirkstoffe bei Raumtemperatur relativ flüchtig sind. DEET greift zudem verschiedene Kunststoffe an und ist aufgrund seiner Materialunverträglichkeit für diese Indikation nicht geeignet.

Es ist bekannt, dass eine Kombination aus DEET und Vanilin eine verlängerte abschreckende Wirkung gegen Fluginsekten wie Moskitos zeigt (Khan, A. A, Maibach, H. I., Skidmore, D. L, "Mosq. News" 35 (1975), 223-225). Diese Kombination wurde auch schon zur Abschreckung von Läusen eingesetzt, ohne dass hierbei eine Velängerung der Wirkdauer gegenüber DEET allein festgestellt wurde (EP-A-0 557174). Zudem wurden in JP-A-0 517 0603 Kombinationen von DEET mit verschiedenen Substanzen, wie beispielsweise Salicylsäurederivaten, zur Abschreckung von Fluginsekten wie beispielsweise Moskitos (Aedes albopictus skuse) verwendet. Aus diesen Veröffentlichungen geht aber nicht hervor, dass derartige Zusammensetzungen eine langanhaltende abschreckende Wirkung gegen kriechende Schadinsekten haben.

Aus FR-A-2 755 141 sind bereits flüssige Detergens-Zusammensetzungen für die Reinigung von festen Oberflächen bekannt, die außerdem Insekten abweisende Eigenschaften aufweisen. Diese Zusammensetzungen enthalten mindestens 2,5 Gew.-% Butylacetylaminopropionsäureethylester (BAAPE) (im Handel erhältlich von der Firma Merck unter der Bezeichnung Merck 3535) in Kombination mit mindestens 0,5 Gew.-% einer oder mehrerer Verbindungen aus der Gruppe Isobornylacetat, D-Umonen, Lilial, Terpineol und Terpenylacetat. Dass derartige Zusammensetzungen eine lang anhaltende abschreckende Wirkung den gegenüber kriechenden Schadinsekten aufweisen, ist darin nicht angegeben.

Es war die Aufgabe der vorliegenden Erfindung, ein Mittel zur Bekämpfung kriechender Schadinsekten bereitzustellen, das die Nachteile der vorstehend beschriebenen Insektizide und Repellentien nicht aufweist.

Diese Aufgabe wird erfindungsgemäss gelöst durch Zusammensetzungen gemäss Patentanspruch 1, ihre Verwendung gemäß Patentanspruch 9 und ein Verfahren gemäß Patentanspruch 7.

Bevorzugte Ausgestaltungen der erfindungsgemäßen Zusammensetzung, Verwendung und Verfahren sind in den Unteransprüchen 2 bis 6 bzw. 10 bzw. 8 jeweils beschrieben.

Die erfindungsgemäßen Zusammensetzungen umfassen ein Repellent als Wirkstoff, ausgewählt aus der Gruppe, die besteht aus 3-(N-Acetyl-N-butyl)aminopropionsäure-ethylester (Merck/IR 3535) der weiter oben angegebenen Formel II und 1-(2-Methylpropyloxycarbonyl)-2-(hydroxyethyl)-piperidin (Bayrepel®) der weiter oben angegebenen Formel III, sowie ein Additiv, das ausgewählt ist aus der Gruppe, die besteht aus Phenol, Benzaldehyd, Benzoesäure, Salicylsäure, Vanillin, trans-Zimtaldehyd, 2,4-Dimethoxybenzaldehyd und p-Hydroxybenzaldehyd. Das Gewichtsverhältnis zwischen Additiv und Repellent beträgt (10-200) : 100, vorzugsweise (80-120) : 100, besonders bevorzugt 100 : 100.

Es hat sich überraschend gezeigt, dass die Wirkung der vorgenannten Repellentien gegen kriechende Schadinsekten auf ein nicht vorhersehbares Mass verlängert werden kann, wenn man diese im Gemisch mit einem der vorstehend angegebenen Additive anwendet. Das Repellent und das Additiv wirken synergistisch zusammen, was zu der überproportionalen Wirkungsverlängerung führt, wobei eine Hemmung der Verdunstung des Repellents durch das Additiv diesen Effekt nicht allein erklären kann.

Als Repellentien können erfindungsgemäss als Verbindungen mit repellierender Wirkung gegen kriechende Schadinsekten IR 3535 (II) und Bayrepel® (III) eingesetzt werden, wobei Bayrepel® erfindungsgemäss besonders bevorzugt ist.

Als Additive können in den erfindungsgemässen Zusammensetzungen eingesetzt werden:
Phenol, Benzaldehyd, Benzoesäure, Salicylsäure, Vanillin, trans-Zimtaldehyd, 2,4-Dimethoxybenzaldehyd und p-Hydroxybenzaldehyd.

Erfindungsgemäß besonders bevorzugt ist das Additiv Salicylsäure.

Die für die erfindungsgemäßen Zusammensetzungen einsetzbaren Repellentien und Additive sind im Handel erhältlich. Die erfindungsgemäßen Zusammensetzungen können durch einfaches Versnischen der gewünschten Bestandteile in den angegebenen Gewichtsverhältnissen erhalten werden.

Erfindungsgemäß beträgt in den Zusammensetzungen das Gewichtsverhältnis von Repellent zu Additiv 100 : (10 bis 200), wobei ein Verhältnis von 100 : (80 bis 120) bevorzugt und ein Verhältnis von 100 : 100 besonders bevorzugt ist.

Die erfindungsgemäßen Zusammensetzungen können zur Bekämpfung von tierischen Schädlingen, insbesondere zur Abschreckung zahlreicher Kriechinsekten, unter anderem im Vorrats- und Materialschutz sowie auf dem Hygienesektor eingesetzt werden. Insbesondere kommen hier Ameisen und Schaben in Betracht. Die erfindungsgemäßen Zusammensetzungen wirken aber auch gegen normal sensible und resistente Arten wie beispielsweise Schädlingen aus der Ordnung der
Chilopoda, z.B. Geophilus carpophagus, Scutigera spec.;
Zygentoma, z.B. Lepisma saccharina;
Collembola, z.B. Onychiurus armatus;
Orthoptera, z.B. Blatta orientalis, Periplaneta americana, Leucophaea maderae, Blattella germanica, Acheta domesticus, Gryllotalpa spp., Locusta migratoria migratorioides, Melanoplus differentailis, Schistocerca gregaria; Dermaptera, z.B. Forficula auricularia;
Isoptera, z.B. Reticulitermes spp.;
Anoplura, z.B. Phylloxera vastatrix, Pediculus humanus corporis, Haemtopinus spp., Linognathus spp.;
Mallophaga, z.B. Trichodectes app., Damalinea spp.,
Larvenstadien aus der Ordnung der Lepidoptera, z.B. Tineola bisselliella; Schädlinge aus der Ordnung der Coleoptera, z.B. Anobium punetatum, Rhizopertha dominica, Acanthoscelides obtectus, Bruchidius obtectus, Hytotruptes bajulus, Agelastiea alni, Leptinotarsa decemlineata, Phaedon cochleariae, Diabrotica spp., Psylliodes chrysocephala, Epilachna, varivestis, Atomaria spp., Oryzaephilus surinamensis, Anthonomus spp., Sitophilus spp., Otiorrhynchus sulcatus, Cosmopolites
sordidus, Ceuthorrhynchus assimilis, Hypera postica, Demestes spp., Trogoderma spp., Anthrenus spp., Attagenus spp., Lyctus spp., Meligethes aeneus, Ptinus spp.,
Niptus hololeucus, Gibbium psylloides, Tribolium spp., Tenebrio molitor, Agriotes spp., Conoderus spp., Melolontha melolontha, Amphimallon solstitalis, Costelytra zealandica;
Hyrnenoptera, z.B. Diprion spp., Hoptocampa spp., Lasius spp., Monomorium pharaonis, Vespa spp.;
Diptera, z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa; Siphonaptera, z.B. Xenopsylla cheopis, Ceratophyllus spp.;
Arachnida, z.B. Scorpio maurus, Latrodectus mactans;
Acarina, z.B. Acarus siro, Argas spp., Omithodoros spp., Dermanyssus gallinae. Eriophyes ribis, Phyllocoptruta oleivora, Boophilus, spp., Rhipicephalus spp., Amblyonima spp., Hyalomma spp., Ixodes spp., Psooptes spp., Chorioptes spp., Sarcoptes spp., Tarsonemus spp., Bryobia praetiosa, Panonychus spp., Tetranychus spp.

Die erfindungsgemäßen Zusammensetzungen können gegen tierische Parasiten wie z.B. Ektoparasiten, beispielsweise Zecken, Milben, Fliegen, Läuse, Flöhe oder Würmer, eingesetzt werden. Sie können gegen alle parasitierenden und nicht parasitierenden Entwicklungsstadien der Ektoparasiten eingesetzt werden.

Die vorliegende Erfindung wird nachstehend anhand von bevorzugten Ausführungsbeispielen näher erläutert, auf die sie jedoch nicht beschränkt ist.

### Beispiel 1

### Bestimmung eines Repellenteffekts von Wirkstoffen auf behandelten Oberflächen gegen Ameisen

Die Versuche werden in Kristallisierschalen (0 30 cm, 10 cm hoch) mit der schwarzgrauen Wegameise (Lasius niger) durchgeführt. Die Wände der Schalen sind talkumiert, um das Entweichen der Testtiere zu verhindern. Der Boden der Schale ist mit einer ca. 3-4 cm hohen, gut befeuchteten Torfschicht befüllt. Mindestens 5 Tage vor Versuchsbeginn werden 300 Ameisen in die Schalen eingesetzt, welche bis zum Versuchsbeginn Gänge und Verstecke gebildet haben. Die so angesetzten Schalen können über mehrere Wochen benutzt werden, sofern die geprüften Substanzen insektizidfrei sind. Die Ameisen erhalten Waldhonig und Kristallzucker als Nahrung, die während der Tests aus den Schalen genommen wird.

Unmittelbar vor Versuchsbeginn werden 2 Glasplatten (5 x 10 cm) in die Schale gelegt. Eine Platte wird mit Wirkstoff behandelt, die andere bleibt unbehandelt. Die Aktivität der Ameisen kann z.B. visuell beobachtet werden.

Es wird die Anzahl der Ameisen ermittelt, die innerhalb von 15 Minuten über die auszuwertende Oberfläche laufen. Dabei muss die Aktivität so hoch sein, dass mindestens 100 Kontakte erreicht werden. Bei nicht ausreichend hoher Aktivität muss die Versuchszeit entsprechend verlängert werden. Durch die Auswertung der Anzahl der Kontakte auf der behandelten und der nicht behandelten Platte kann die Repellentwirkung ermittelt werden.

Nachstehend sind die Ergebnisse der Experimente mit verschiedenen Zusammensetzungen aus Repellent und Additiv aufgeführt. In den Zusammensetzungen waren das Repellent und das Additiv im Verhältnis 100:100 Gew.% vermischt. Von den verwendeten Additiven wirkte lediglich Vanillin auf die Ameisen leicht abschreckend. Als Vergleichsbeispiele sind Zusammensetzungen aus Bayrepel® und Polyethylenglykol (PEG) bzw. Glycerin aufgeführt, welche keine Wirkungsverlängerung zeigen.

**Tabelle 1:**

| Repellierende Wirkung verschiedener Additive zur Wirkungsverlängerung von Repellentien gegen Anmeisen | | | | | | | | |
|---|---|---|---|---|---|---|---|---|
| | % Reduktion der Kontakte nach Tagen | | | | | | | |
| Additiv in 1500 mg / m² | 1 | 2 | 3 | 4 | 7 | 8 | 9 | 10 |
| | | | | | | | | |
| Salicylsäure | 3 | -- | -- | -- | -- | -- | -- | -- |
| Vanillin | 63 | 46 | 65 | 83 | 51 | 35 | 0 | 0 |
| trans-Zimtaldehyd | 0 | -- | -- | -- | -- | -- | -- | -- |
| 2,4-Dimethoxybenzaldehyd | 0 | -- | -- | -- | -- | -- | -- | -- |
| p-Hydroxybenzaldehyd | 23 | -- | -- | -- | -- | -- | -- | -- |
| PEG 400 | 13 | -- | -- | -- | -- | -- | -- | -- |
| Glycerin | 0 | -- | -- | -- | -- | -- | -- | -- |
| PEG: Polyethylenglykol | | | | | | | | |

**Tabelle 2:**

| Repellierende Wirkung von IR 3535 allein und in Kombination mit verschiedenen Additiven zur Wirkungsverlängerung gegen Ameisen. | | | | | | | | | | |
|---|---|---|---|---|---|---|---|---|---|---|
| Bsp. | Auftragsmenge: 1500 mg a.i./m² | | % Reduktion der Kontakte nach Tagen | | | | | | | |
| | Repellent | Additiv | 1 | 2 | 3 | 4 | 7 | 8 | 9 | 10 |
| | | | | | | | | | | |
| 1 | IR 3535 | --- | 98 | 91 | 29 | 0 | 0 | 0 | --- | 0 |
| 2 | IR 3535 | + Salicylsäure | 98* | 72* | 65* | 97* | 65* | 86* | --- | 87* |
| 3 | IR 3535 | + Vanillin | 81 | 81 | 74 | 79 | 36 | 50 | --- | 75 |
| 4 | IR 3535 | + trans-Zimtaldehyd | 100 | 89 | 86 | 52 | 25 | 3 | --- | 0 |

| | | | | | | | | | | |
|---|---|---|---|---|---|---|---|---|---|---|
| *- hohe Ergebnisschwankungen, aber deutlich positiver Effekt | | | | | | | | | | |

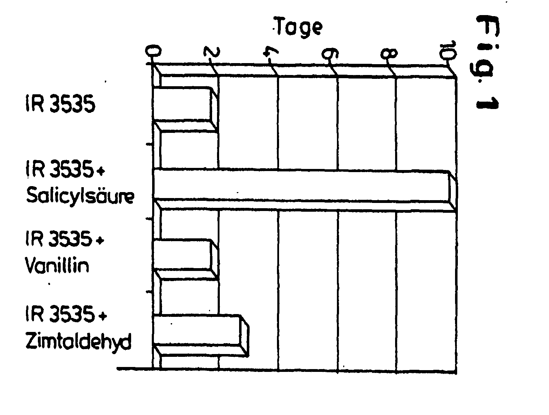

Die graphische Darstellung der repellierenden Wirkung (80-100% Reduktion der Kontakte) von IR 3535 alleine und in Kombination mit verschiedenen Additiven ist in Fig. 1 gezeigt.

**Tabelle 3:**

| Repellierende Wirkung von KBR 3023 (Bayrepel®)allein und in Kombination mit verschiedenen Additiven zur Wirkungsverlängerung gegen Ameisen | | | | | | | | | | | | | | |
|---|---|---|---|---|---|---|---|---|---|---|---|---|---|---|
| Beisp. | Auftragsmenge: 1500 mg a.i./m² | % Reduktion der Kontakte nach Tagen | | | | | | | | | | | | |
| 9 | Repellent +Additiv | 1 | 2 | 3 | 4 | 7 | 8 | 9 | 10 | 11 | 14 | 15 | 16 | 17 |
| | | | | | | | | | | | | | | |
| 10 | KBR 3023 ― | 100 | 98 | 99 | 97 | 76 | 53 | 77 | 47 | 40 | 11 | 7 | 0 | 12 |
| 11 | KBR 3023 + Salicylsäure | 100 | 10 0 | 99 | 100 | 100 | 98 | 96 | 97 | 98 | 93 | 95 | 72 | 60 |
| 12 | KBR 3023 +Vanillin | 100 | 100 | 99 | 99 | 87 | 71 | 82 | 92 | 34 | 11 | -- | -- | -- |
| 13 | KBR 3023 + trans-Zimtaldehyd | 100 | 97 | 96 | 94 | 80 | 92 | 89 | 86 | 86 | 42 | -- | -- | -- |
| 14 | KBR 3023 + 2,4- Dimethoxybenzaldehyd | 98 | 100 | 96 | 93 | 80 | 96 | 83 | 66 | 66 | -- | -- | -- | -- |
| 15 | KBR 3023 + p-Hydroxybenzaldehyd | 89 | 93 | 92 | 69 | 87 | 89 | 76 | 50 | -- | -- | -- | -- | -- |
| Vgl.-Bsp. 1 | KBR 3023 +PEG 400 | 98 | 96 | 95 | 79 | -- | -- | -- | -- | -- | -- | -- | -- | -- |
| Vgl.-Bsp. 2 | KBR 3023 + Glycerin | 100 | 100 | 100 | 96 | 14 | 0 | -- | -- | -- | -- | -- | -- | -- |

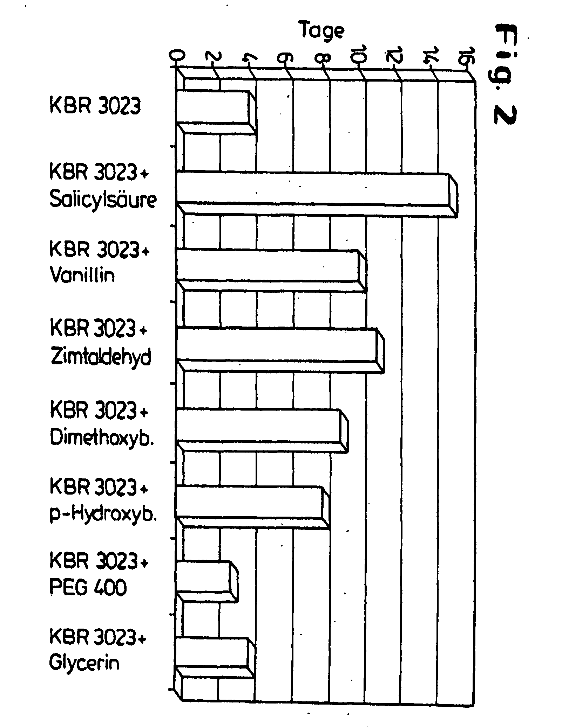

Die graphische Darstellung der repellierenden Wirkung (80-100% Reduktion der Kontakte) von KBR 3023 (Bayrepel®) allein und in Kombination mit verschiedenen Additiven ist in Fig. 2 gezeigt.

### Beispiel 2

### Repellierende Wirkung von KBR 3023 (Bayrepel®) gegen Schaben

Die repellierende Wirkung von KBR 3023 (Bayrepel®) wurde gegen Deutsche Schaben (Blattella germanica) im 5. Larvenstadium geprüft. Zusätzlich wurde getestet, ob der aromatische Aldehyd Vanillin die Residualwirkung verbessern kann.

Die Versuche werden in nach oben hin offenen Versuchskästen aus Pappe (60 x 40 cm) durchgeführt. Die Wände der Kästen sind talkumiert, um das Entweichen der Testtiere zu verhindern. An einer Breitseite des Kastens wird ein weisses Papphäuschen als Versteck (12 x 6,5 x 2,5 cm), im Abstand von 3 cm zur Wand, aufgestellt. Durch eine 2 cm breite und 1 cm hohe Öffnung an der Wandseite des Versteckes wird den Schaben das Begehen ermöglicht. 24 Stunden vor Versuchsbeginn werden 50 Schaben in die Kästen eingesetzt, welche bis zum Versuchsbeginn mehrheitlich das Versteck aufsuchen.

Über dem Versuchskasten werden zwei Infrarotlampen so an einem Stativ befestigt, dass das Rotlicht direkt in die Versuchskästen strahlt.

Am Versuchstag, unmittelbar vor Versuchsbeginn, werden 2 Kacheln(15 x 15 cm) in den Kasten gelegt. Eine Kachel wird vorher mit Wirkstoff behandelt, die andere bleibt unbehandelt. Um die Schaben auf die Kacheln zu locken, wird hinter den Kacheln ein Lupolenstopfen (Durchmesser 1,5 cm, Höhe 0,5 cm) mit in Wasser aufgelösten Schmelzflocken gestellt. Danach wird der Versuchsraum völlig abgedunkelt und nur mit dem Infrarotlicht beleuchtet.

Die einsetzende Aktivität der Schaben kann z. B. visuell (ggfs. unter Verwendung von Nachtsichtgeräten) beobachtet werden.

Es wird die Anzahl der Schaben ermittelt, die innerhalb von einer Stunde und zwanzig Minuten nach Versuchsstart über das mittlere Drittel der Kacheln laufen. Durch die Auswertung der Anzahl der Kontakte auf der behandelten und der nicht behandelten Kachel kann die Repellentwirkurig ermittelt werden.

Nachstehend sind die Ergebnisse der Experimente mit einer Zusammensetzung aus Bayrepel® und Vanilin aufgeführt. In der Zusammensetzung waren das Repellent und das Additiv im Gewichtsverhättnis 100 : 100 vermischt.

**Tabelle 4:**

| Repellierende Wirkung von KBR 3023 (Bayrepel®) allein und in Kombination mit Vanillin zur Wirkungsverlängerung gegen Blattella germanica L 5 auf lasierten Kacheln. | | | | | | | | | | | |
|---|---|---|---|---|---|---|---|---|---|---|---|
| Auftragsmenge: jeweils 3000 mg a.i./m² | % Reduktion der Kontakte nach Tagen | | | | | | | | | | |
| Repellent + Additiv | 7 | 10 | 11 | 13 | 16 | 18 | 20 | 23 | 28 | 32 | 35* |
| | | | | | | | | | | | |
| KBR -3023 | 100 | 98 | 91 | 74 | 49 | 16 | 0 | 5 | 0 | 0 | 8 |
| KBR + Vanillin 3023 | 100 | 97 | 100 | 99 | 99 | 98 | 93 | 95 | 99 | 94 | 76 |

| | | | | | | | | | | | |
|---|---|---|---|---|---|---|---|---|---|---|---|
| *- Abbruch nach 35 Tagen | | | | | | | | | | | |

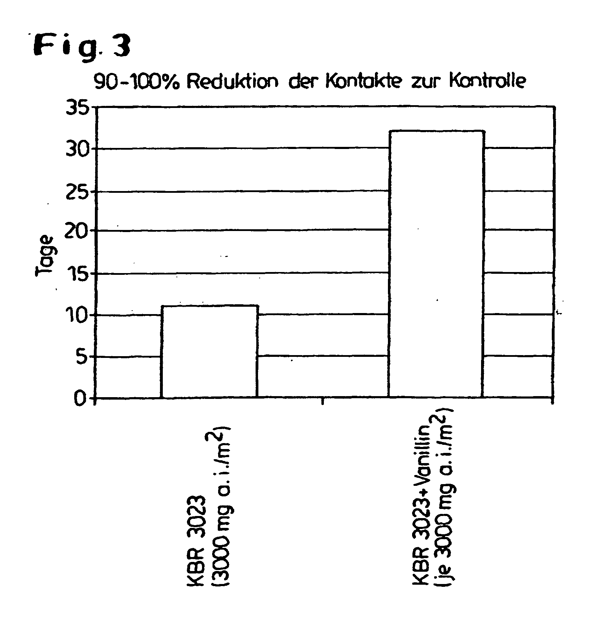

Die graphische Darstellung der repellierenden Wirkung (90-100 % Reduktion der Kontakte) von KBR 3023 (Bayrepel®) allein und in Kombination mit Vanillin gegen Blattella ist in Fig. 3 gezeigt.

## Patentansprüche

1. Zusammensetzung zur Abschreckung kriechender Schadinsekten, die umfasst ein Repellent als Wirkstoff und ein Additiv, worin das Repellent ausgewählt ist aus der Gruppe, die besteht aus 3-(N-Acetyl-N-butyl)aminopropionsäure-ethylester (Merck/IR 3535) und 1-(2-Methylpropyloxycarbonyl)-2-(hydroxyethyl)-piperidin (Bayrepel®), und das Additiv ausgewählt ist aus der Gruppe, die besteht aus Phenol, Benzaldehyd, Benzoesäure, Salicylsäure, Vanillin, trans-Zimtaldehyd, 2,4-Dimethoxybenzaldehyd und p-Hydroxybenzaldehyd,
wobei das Additiv und das Repellent in einem Gewichtsverhältnis von (10-200) : 100 vorliegen.

2. Zusammensetzung nach Anspruch 1, worin das Gewichtsverhältnis von Additiv zu Repellent in dem Bereich von (80-120) : 100 liegt.

3. Zusammensetzung nach Anspruch 2, worin das Gewichtsverhältnis von Additiv zu Repellent 100 : 100 beträgt.

4. Zusammensetzung nach Anspruch 1, worin das Repellent 1-(2-Methylpropyloxycarbonyl)-2-(hydroxyethyl)-piperidin (Bayrepel®) ist.

5. Zusammensetzung nach Anspruch 1, worin das Additiv Salicylsäure ist.

6. Zusammensetzung nach Anspruch 1, worin das Repellent 1-(2-Methylpropyloxycarbonyl)-2-(hydroxyethyl)-piperidin (Bayrepel®) ist und das Additiv Salicylsäure ist.

7. Verfahren zum Abschrecken kriechender Schadinsekten, das umfasst das Aufbringen einer Zusammensetzung, die umfasst ein Repellent als Wirkstoff und ein Additiv, worin das Repellent ausgewählt ist aus der Gruppe, die besteht aus 3-(N-Acetyl-N-butyl)aminopropionsäure-ethylester (Merck/IR 3535) und 1-(2-Methylpropyloxycarbonyl)-2-(hydroxyethy)-piperidin (Bayrepel®), und das Additiv ausgewählt ist aus der Gruppe, die besteht aus Phenol, Benzaldehyd, Benzoesäure, Salicylsäure, Vanillin, trans-Zimtaldehyd, 2,4-Dimethoxybenzaldehyd und p-Hydroxybenzaldehyd,
wobei das Additiv und das Repellent in einem Gewichtsverhältnis von (10-200) : 100 vorliegen,
auf eine Oberfläche, die von den Schadinsekten nicht überwunden werden soll.

8. Verfahren nach Anspruch 7, wobei die Zusammensetzung auf eine Oberfläche aufgebracht wird, die von Ameisen oder Schaben nicht überwunden werden soll.

9. Verwendung einer Zusammensetzung, die umfasst ein Repellent als Wirkstoff und ein Additiv, worin das Repellent ausgewählt ist aus der Gruppe, die besteht aus 3-(N-Acetyl-N-butyl)aminopropionsäure-ethylester (Merck/IR 3535) und 1-(2-Methylpropyloxycarbonyl)-2-(hydroxyethyl)-piperidin (Bayrepel®), und das Additiv ausgewählt ist aus der Gruppe, die besteht aus Phenol, Benzaldehyd, Benzoesäure, Salicylsäure, Vanillin, trans-Zimtaldehyd, 2,4-Dimethoxybenzaldehyd und p-Hydroxybenzaldehyd,
wobei das Additiv und das Repellent in einem Gewichtsverhältnis von (10-200) : 100 vorliegen,
zum Abschrecken kriechender Schadinsekten.

10. Verwendung nach Anspruch 9 zum Abschrecken von Ameisen oder Schaben.

## Claims

1. A composition for repelling crawling insect pests, comprising a repellant as an active agent and an additive, wherein
the repellant is selected from the group consisting of 3-(N-acetyl-N-butyl) aminopropionic acid ethyl ester (Merck/IR 3535), and 1-(2-methylpropyloxy carbonyl)-2-(hydroxyethyl)-piperidine (Bayrepel®), and
the additive is selected from the group consisting of phenol, benzaldehyde, benzoic acid, salicylic acid, vanillin, trans-cinnamaldehyde, 2,4-dimethoxy benzaldehyde, and p-hydroxy benzaldehyde,
wherein the additive and the repellent are present in a weight ratio of (10-200) : 100.

2. The composition according to claim 1, wherein the weight ratio of additive to repellant is in the range of (80-120) : 100.

3. The composition according to claim 2, wherein the weight ratio of additive to repellant is 100 : 100.

4. The composition according to claim 1, wherein the repellant is 1-(2-methylpropyloxycarbonyl)-2-(hydroxyethyl)-piperidine (Bayrepel®).

5. The composition according to claim 1, wherein the additive is salicylic acid.

6. The composition according to claim 1, wherein the repellant is 1-(2-methylpropyloxycarbonyl)-2-(hydroxyethyl)-piperidine (Bayrepel®) and the additive is salicyclic acid.

7. A process for repelling crawling insect pests comprising the application of a composition comprising a repellant, as an active agent, and an additive, wherein the repellant is selected from the group consisting of 3-(N-acetyl-N-butyl) aminopropionic acid ethyl ester (Merck/IR 3535) and 1-(2-methylpropyloxy-carbonyl)-2-(hydroxyethyl)-piperidine (Bayrepel®), and the additive is selected from the group consisting of phenol, benzaldehyde, benzoic acid, salicylic acid, vanillin, trans-cinnamaldehyde, 2,4-dimethoxy benzaldehyde, and p-hydroxy benzaldehyde,
wherein the additive and the repellent are present in a weight ratio of from (10-200) : 100.
onto a surface which is not to be passed by the insect pests.

8. The process according to claim 7, wherein the composition is applied onto a surface which is not to be passed by ants or cockroaches.

9. Use of a composition comprising a repellant as an active agent and an additive, wherein
the repellant is selected from the group consisting of 3-(N-acetyl-N-butyl) amino propionic acid ethyl ester (Merck/IR 3535) and 1-(2-methylpropyloxy carbonyl)-2-(hydroxyethyl)-piperidine (Bayrepel®), and the additive is selected from the group consisting of phenol, benzaldehyde, benzoic acid salicylic acid, vanillin, trans-cinnamaldehyde, 2,4-dimethoxy benzaldehyde, and p-hydroxy benzaldehyde,
wherein the additive and the repellent are present in a weight ratio of from (10-200) :100;
for repelling crawling insect pests.

10. The use according to claim 9 for repelling ants or cockroaches.

## Revendications

1. Composition destinée à repousser des insectes nuisibles rampants, comprenant un répulsif en tant qu'une substance active et un additif, dans laquelle
le répulsif est choisi dans un groupe consistant en l'ester éthylique de l'acide 3-(N-acétyl-N-butyl)aminopropionique (Merck/IR 3535) et le 1-(2-méthylpropyloxy-carbonyl)-2-(hydroxyéthyl)-pipéridine (Bayrepel®) et
l'additif est choisi dans un groupe consistant en le phénol, le benzaldéhyde, l'acide benzoique, l'acide salicylique, le vanilline, le trans-cinnamaldéhyde, le 2,4-diméthoxy-benzaldéhyde et le p-hydroxy-benzaldéhyde,
l'additif et le répulsif étant présents en un rapport en poids de l'additif sur le répulsif dans la gamme (10-200) : 100.

2. Composition selon la revendication 1, dans laquelle le rapport en poids de l'additif sur le répulsif est dans la gamme (80-120) : 100.

3. Composition selon la revendication 1, dans laquelle le rapport en poids de l'additif sur le répulsif est 100 : 100.

4. Composition selon la revendication 1, dans laquelle le répulsif est le 1-(2-méthylpropyloxycarbonyl)-2-(hydroxyéthyl)-pipéridine (Bayrepel®).

5. Composition selon la revendication 1, dans laquelle l'additif est l'acide salicylique.

6. Composition selon la revendication 1, dans laquelle le répulsif est le 1-(2-méthylpropyloxycarbonyl)-2-(hydroxyéthyl)-pipéridine (Bayrepel®) et l'additif est l'acide salicyclique.

7. Procédé pour repousser des insectes nuisibles rampants comprenant l'application d'une composition comprenant un répulsif en tant qu'une substance active et un additif, dans laquelle
le répulsif est choisi dans un groupe consistant en l'ester éthylique de l'acide 3-(N-acétyl-N-butyl)aminopropionique (Merck/IR 3535) et le 1-(2-méthylpropyloxy-carbonyl)-2-(hydroxyéthyl)-pipéridine (Bayrepel®) et
l'additif est choisi dans un groupe consistant en le phénol, le benzaldéhyde, l'acide benzoique, l'acide salicylique, le vanilline, le trans-cinnamaldéhyde, le 2,4-diméthoxy-benzaldéhyde et le p-hydroxy-benzaldéhyde,
l'additif et le répulsif étant présents en un rapport en poids de l'additif sur le répulsif dans la gamme (10-200) : 100,
sur une surface qui ne doit pas passée par les insectes nuisibles.

8. Procédé selon la revendication 7, dans laquelle la composition est appliquée sur la surface qui ne doit pas passée par des fourmis ou des cafards.

9. Utilisation d'une composition comprenant un répulsif en tant qu'une substance active et un additif, dans laquelle
le répulsif est choisi dans un groupe consistant en l'ester éthylique de l'acide 3-(N-acétyl-N-butyl)aminopropionique (Merck/IR 3535) et le 1-(2-méthylpropyloxy-carbonyl)-2-(hydroxyéthyl)-pipéridine (Bayrepel®) et
l'additif est choisi dans un groupe consistant en le phénol, le benzaldéhyde, l'acide benzoique, l'acide salicylique, le vanilline, le trans-cinnamaldéhyde, le 2,4-diméthoxy-benzaldéhyde et le p-hydroxy-benzaldéhyde,
l'additif et le répulsif étant présents en un rapport en poids de l'additif sur le répulsif dans la gamme (10-200) : 100;
pour repousser des insectes nuisibles rampants.

10. Utilisation selon la revendication 9 pour repousser des fourmis ou des cafards.
